# EUROPÄISCHE PATENTSCHRIFT

(11) **EP 2 222 419 B1**
(45) Veröffentlichungstag und Bekanntmachung des Hinweises auf die Patenterteilung: **14.08.2013**
(21) Anmeldenummer: 08860284.2
(22) Anmeldetag: 22.11.2008
(51) Int. Cl.: B07C 5/34, G01N 29/14

(54) **VORRICHTUNG UND VERFAHREN FÜR DIE QUALTITÄTSPRÜFUNG VON BLECHTEILEN**
DEVICE AND METHOD FOR QUALITY TESTING SHEET METAL PARTS
DISPOSITIF ET PROCÉDÉ DE CONTRÔLE DE QUALITÉ DE PIÈCES EN TÔLE

(30) Priorität: 12.12.2007 DE 102007060278
(43) Veröffentlichungstag der Anmeldung: 01.09.2010
(73) Patentinhaber: Dr. Ing. h.c. F. Porsche Aktiengesellschaft, 70435 Stuttgart (DE)
(72) Erfinder: MENTEN, Rainer, 01468 Moritzburg (DE); SCHNEEGAST, Bernd, 98693 Illmenau (DE); LICHT, Christian, 70435 Stuttgart (DE); HEIMBERGER, Hans-Stefan, 75417 Mühlacker (DE); UHLIG, Timo, 01187 Dresden (DE); EICHLER, Andreas, 01169 Dresden (DE); JONUSCHEIT, Horst, 91077 Dormitz (DE)
(86) Internationale Anmeldenummer: PCT/EP2008/009919
(87) Internationale Veröffentlichungsnummer: WO 2009/074220

(56) Entgegenhaltungen:
- EP-A- 0 217 758
- DD-A5- 293 428
- DE-A1- 4 207 728
- DE-A1- 4 242 442
- DE-B3-102004 031 184
- GB-A- 2 340 604

## Beschreibung

Die Erfindung betrifft eine Vorrichtung und ein Verfahren für die Qualitätsprüfung von Blechteilen gemäß dem Oberbegriff des Patentanspruchs 1 bzw. 11.

In der Fahrzeugserienproduktion ist es üblich, Blechteile für die Karosserie, insbesondere Tiefziehteile, vor dem Einbau auf deren Qualität zu prüfen. Insbesondere bei Tiefziehteilen mit großen Tiefen kann es beispielsweise bei Werkzeugänderungen oder Schwankungen in der Blechdicke zu Rissen oder Einschnürungen am Blechteil kommen. Werden diese fehlerbehafteten Blechteile weiterverarbeitet, wird der Aufwand bei der Nachbearbeitung erhöht.

Aus der DD 293428 A5 ist ein Verfahren und eine Vorrichtung zur Ermittlung von Dopplungen in Blechen bekannt. Dabei wird das ebene Blech auf einen planaren Prüftisch abgelegt und der bei einer elastischen Verformung des zu prüfenden Bauteils charakteristische Körperschall einer konkreten Bauteildeformation zugeordnet.

Aus der DE 42 07 728 A1 ist ein Verfahren zur Qualitätsprüfung von Prüfobjekten durch Anregung des Prüfobjekts und Auswertung der gemessenen Schallkurve bekannt. Die Auswertung der Schallkurve erfolgt durch ein neuronales Netzwerk, das in einer Trainingsphase anhand eines ausgewählten Satzes von Prüfobjekten angelernt wurde.

Die Aufgabe der Erfindung besteht darin, die Eignung des gattungsgemäßen Verfahrens bzw. der gattungsgemäßen Vorrichtung für einen automatisierten Einsatz in der Fahrzeugserienproduktion zu erhöhen.

Die Aufgabe wird erfindungsgemäß mit den Merkmalen des Patentanspruchs 1 bzw. 11 gelöst.

Weitere vorteilhafte Ausgestaltungen ergeben sich aus den Merkmalen der Unteransprüche.

Gemäß Anspruch 1 ist eine Vorrichtung für die Qualitätsprüfung von Blechteilen vorgesehen, die eine Prüfvorrichtung und eine Sortiervorrichtung umfasst. Die Prüfvorrichtung weist einen Impulsgeber auf, der das Blechteil zum Schwingen anregt und anschließend diese Schwingungen durch einen Schallaufnehmer als Schallkurve aufgezeichnet werden. Eine Auswerteeinheit der Prüfeinrichtung vergleicht den aufgezeichneten Schallverlauf mit einer Referenzkurve und erzeugt ein Signal, mit dem eine Klassifizierung der Blechteile möglich ist. Erfindungsgemäß ist vorgesehen, dass die Prüfvorrichtung in eine Pressenstraße taktgebunden integriert ist. D.h. der Takt, der in der Pressenstraße vorgegeben ist, wird bevorzugt auch bei der Prüfvorrichtung eingehalten. Dazu wird die Prüfvorrichtung nach der letzten Pressenstufe angeordnet und taktgebunden mit Blechteilen der letzten Pressenstufe versorgt. Innerhalb eines Taktes wird das Blechteil also mit der erfindungsgemäßen Vorrichtung auf seine Qualität überprüft. Die Blechteile werden dazu gemäß dem beanspruchten Verfahren nach Anspruch 11 in die Prüfvorrichtung eingelegt. Dabei kann das Einlegen durch einen Roboter erfolgen. Nach dem Einlegen in die Prüfvorrichtung wird das Blechteil zum Schwingen angeregt und der Schallaufnehmer nimmt die Schallkurve auf. Sofern die Auswerteeinheit ermittelt, dass der aufgezeichnete Schallverlauf nicht im Toleranzbereich der Referenzkurve liegt, wird das Blechteil durch eine Sortiervorrichtung aus dem Prozess aussortiert.

In einer Ausführungsform kann die Prüfvorrichtung einen Rahmen umfassen, der schwingungsentkoppelt auf einem Boden oder auf einem Maschinenteil befestigt ist. Das hat den Vorteil, dass umgebende Schwingungen den Messprozess nicht beeinträchtigen oder die Messergebnisse verfälschen.

Vorzugsweise kann die Schwingungsentkopplung als elastomeres Lager ausgeführt sein, die an mit dem Boden oder dem Maschinenteil befestigten Füßen gehalten ist. Es ist möglich die Prüfvorrichtung entweder am Hallenboden oder auf einer nicht am Umformprozess beteiligten Presse zu montieren. Sofern die Prüfvorrichtung auf einer Presse selbst montiert wird, hat das den Vorteil, dass als Zuführeinrichtung ein ohnehin zwischen zwei Pressen vorhandener Roboter eingesetzt werden kann. Außerdem lässt sich die Prüfvorrichtung in jede bestehende Pressenstraße einfach nachrüsten. Alternativ kann die Prüfvorrichtung durch eine Bedienperson versorgt werden, die das fertig tiefgezogene Blechteil von der letzten Pressenstufe der vorgeschalteten Pressenstraße entnimmt und in die Prüfvorrichtung einlegt.

Es ist vorgesehen, dass das Blechteil während der Aufzeichnung der Schallkurve auf mindestens zwei Aufnahmen der Prüfvorrichtung gelagert ist. Die Anzahl der Auflagepunkte sollte in Abhängigkeit der Größe des zu überprüfenden Blechteils gewählt werden. Allerdings sind mehr als drei Auflagepunkte in Bezug auf die ungehinderte Schwingung des Blechteils nicht zu empfehlen.

Wenn die mindestens zwei Aufnahmen mit einem Abstand, der der überwiegenden Länge oder Breite des Blechteils entspricht, voneinander beabstandet sind, können sich die Schwingungen des Blechteils optimal ausbreiten und dementsprechend aufgezeichnet werden.

Es kann eine zweite Schwingungsentkopplung vorgesehen sein, indem die Aufnahmen für das Blechteil schwingungsentkoppelt vom Rahmen sind.

Dazu kann ein Aufnahmebolzen die elastomer ausgebildeten Aufnahmen durchsetzen.

Um das Einlegen des Blechteils in die Prüfvorrichtung zu erleichtern, kann der Aufnahmebolzen abgerundet ausgebildet sein.

Vorzugsweise kann der Schallaufnehmer im Nahbereich einer der Aufnahmen angeordnet sein, so dass beide, Aufnahme und Schallaufnehmer an einem gemeinsamen Träger befestigt werden können.

Der Impulsgeber kann im Nahbereich der anderen Aufnahme angeordnet sein, so dass auch hier ein gemeinsamer Träger für Impulsgeber und Aufnahme vorgesehen sein kann.

Ein hoher Automatisierungsgrad kann erreicht werden, wenn eine Zuführeinrichtung das Blechteil von der vorgeschalteten Pressenstraße übernimmt. Handelt es sich bei der Zuführeinrichtung um einen Roboter kann die Zuführeinrichtung das Blechteil automatisch der Prüfvorrichtung zuführen.

Die Zuführeinrichtung überführt das übernommene Blechteil von der letzten Pressenstufe in Richtung der Prüfvorrichtung und legt es dort auf zwei Aufnahmebolzen ab.

Anschließend regt der Impulsgeber das auf den zwei Aufnahmebolzen ruhende Blechteil zum Schwingen an, währenddessen die Aufzeichnung der Schallkurve durch den Schallaufnehmer erfolgt. Die Aufzeichnung sollte bereits kurz vor dem Anregen beginnen, um einen unerregten Zustand aufzuzeichnen. Die Aufzeichnungsdauer kann im Prinzip im Rahmen der vorgegebenen Taktzeit frei gewählt werden, wobei Dauer der Berechnungszeit sowie der Entnahme durch die Sortiervorrichtung mit berücksichtigt werden muss. Es hat sich gezeigt, dass eine Aufzeichnungsdauer von 1 Sekunde ausreichend ist, um ein fehlerfreies von einem fehlerbehafteten Teil zu unterscheiden. Es kann vorgesehen werden, das Blechteil mehrfach, d.h. an mehreren Stellen, anzuregen. Ein Mehrfachanschlag ist dann sinnvoll, wenn auf Grund der Schwingungsanregung und - ausbreitung eine einzige Anschlagstelle nicht ausreichend ist. Gründe dazu sind eventuell die flächenmäßige Größe des Blechteils, Steifigkeiten, Rotationssymmetrie von Bauteilen o.ä. Die einzelnen Anschläge können separat (z.B. Vergleich für jede Anschlagstelle separat und anschließende Gesamtbewertung) oder kumuliert (z.B. Addition der Einzelspektren) ausgewertet werden.

Die aufgezeichnete Schallkurve kann in einer Auswerteeinheit mit einer Referenzkurve in einer Auswerteeinheit verglichen werden. Die Auswerteinheit gibt entsprechend des Ergebnisses ein Signal aus, mit dem eine Klassifizierung des Blechteils möglich ist

Sofern die aufgezeichnete Schallkurve innerhalb der zugelassenen und vorher definierten Referenzkurve liegt, handelt es sich um ein fehlerfreies Teil. Das Blechteil kann von der Sortiereinrichtung an die nächste Bearbeitungsstation, zum Beispiel zum Versand, übergeben werden.

Sofern die aufgezeichnete Schallkurve außerhalb des Toleranzbereichs der Referenzkurve liegt, wird das Blechteil von der Sortiereinrichtung an eine Zwischenstation übergeben. Die Zwischenstation kann beispielsweise ein Ablagestapel oder ein Lager sein.

Die aussortierten Blechteile der Zwischenstation können anschließend einer zweiten genaueren Qualitätsprüfung unterzogen werden. Diese kann manuell vorgenommen werden.

Weitere vorteilhafte Ausgestaltungen der Erfindung werden im Folgenden anhand der Zeichnung näher erläutert. Dabei zeigen:
- Figur 1: eine schematische Darstellung einer Pressenstraße mit integrierter Prüfvorrichtung,
- Figur 2: eine Prüfvorrichtung mit einem Blechteil in einer Ansicht von schräg oben,
- Figur 3: eine Prüfvorrichtung ohne Blechteil gemäß Figur 2 sowie
- Figur 4: eine Aufnahme mit Schallaufnehmer gemäß Figur 2 in einer perspektivischen Seitenansicht.

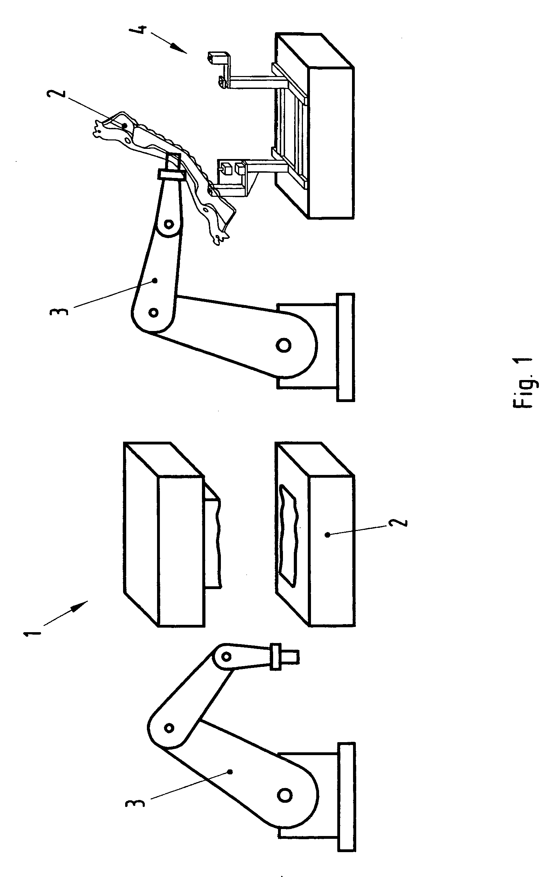

Aus Figur 1 geht eine schematische Anordnung der Komponenten einer Pressenstraße hervor. Für das Umformen einer Querträgerschale mit großer Ziehtiefe sind mehrere hintereinander angeordnete Pressen 1 notwendig, die in einer entsprechenden Taktzeit mit Blechteilen 2 versorgt werden. Die Handhabung der Blechteile 2 von Presse zu Presse erfolgt vollautomatisch mit Robotern 3. Von der Pressenstraße ist in Figur 1 lediglich die letzte Pressenstufe 1 mit der sich anschließenden Prüfvorrichtung 4 dargestellt. Für die Erfindung ist es unerheblich, ob die Pressenstraße vollautomatisch oder manuell bedient wird. Wichtig ist, dass die Qualität des Umformprozesses am Ende durch die Prüfvorrichtung 4 taktgebunden, d.h. innerhalb des vorgegebenen Taktes der Pressenstraße, überprüft wird.

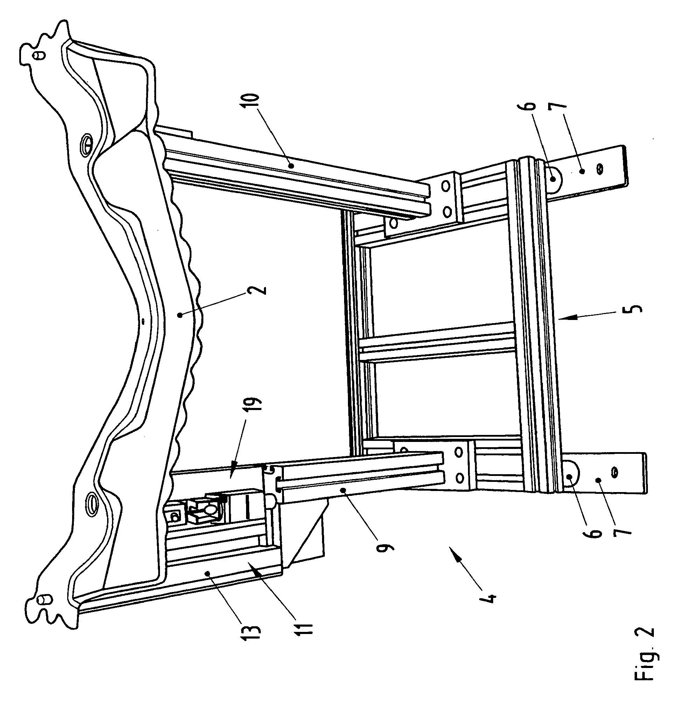

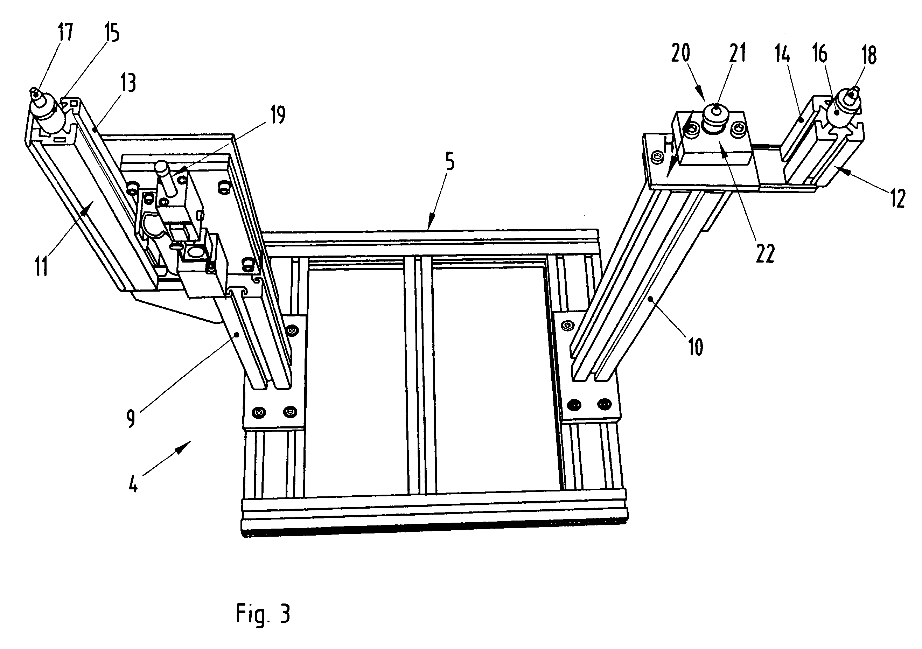

Die Prüfvorrichtung 4 ist in eine Presse integrierbar und somit in jeder Pressenstraße nachrüstbar. Die Prüfvorrichtung 4 umfasst gemäß Figur 2 und Figur 3 einen Rahmen 5, der über elastomere Lager 6 an Füßen 7 gehalten ist. Mit den Füßen 7 ist die Prüfvorrichtung 4 entweder am Hallenboden an einen Träger 8 oder auf einer nicht am Umformprozess beteiligten Presse selbst befestigt. Die elastomeren Lager 6 dienen der Schwingungsentkopplung der Prüfvorrichtung 4 von der Presse bzw. dem Hallenboden. Vom Rahmen 5 stehen Tragsäulen 9 und 10 ab, die der Aufnahme des Blechteils 2 dienen. Dazu ist jeweils ein Haltewinkel 11 und 12 am oberen Ende der Tragsäule 9 bzw. 10 befestigt. Von senkrecht verlaufenden Schenkeln 13 bzw. 14 der Haltewinkel 11 bzw. 12 steht eine elastomere Aufnahme 15, 16 ab, in die ein Aufnahmebolzen 17, 18 versenkt angeordnet ist. Der Aufnahmebolzen 17, 18 ist oben abgerundet ausgebildet, um das Aufsetzen bzw. Einfädeln des Blechteils 2 zu erleichtern. Die Aufnahmebolzen 17, 18 durchsetzen während des Prüfvorganges ohnehin vorhandene Bohrungen im Blechteil 2, sodass das Blechteil 2 an zwei Auflagepunkten aufliegt, die relativ weit voneinander entfernt angeordnet sind. Damit ist ein gutes Ausschwingen nach der Anregung des Blechteils 2 möglich. Der linke Haltewinkel 11 nimmt zusätzlich noch einen Schallaufnehmer 19 auf, während am Haltewinkel 12 der Impulsgeber 20 angeordnet ist.

Wie aus Figur 3 hervorgeht, umfasst der Impulsgeber 20 einen Stößel 21, der mittels einer Hubeinrichtung bzw. Stoßvorrichtung 22 zur Schwingungsanregung des Blechteils 2 in Pfeilrichtung H ausgefahren wird. Die Steuerungsbefehle für die Hubeinrichtung 22 werden von einer zentralen Steuereinheit gegeben. Dabei kann die Steuerung einerseits durch das Messsystem einen Freigabetrigger von der Anlagensteuerung erhalten. Andererseits kann die Anlagensteuerung einen Trigger erhalten, wenn das Blechteil 2 positioniert und frei ist.

Die Hubeinrichtung 22 kann hydraulisch oder pneumatisch arbeiten, aber auch elektrisch angetrieben werden.

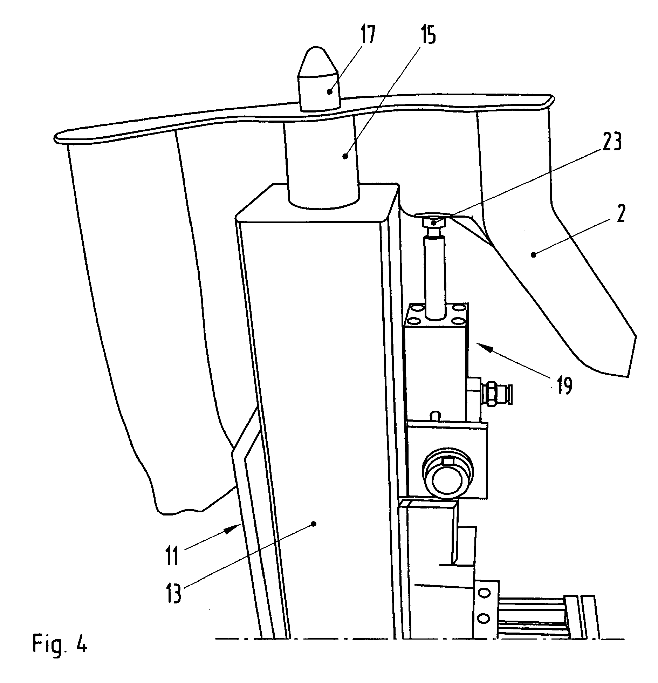

Wie aus Figur 4 hervorgeht, ist am Haltewinkel 11 der Schallaufnehmer 19, der die durch den Stößel 21 erzeugten Schwingungen des Blechteils 2 aufnimmt, befestigt. Der Schallaufnehmer 19 ist ebenfalls mit der Steuereinheit datentechnisch verbunden. Nach Möglichkeit ist der Schallaufnehmer 19 so an dem Blechteil 2 anzuordnen, dass die Körperschallwellen ungehindert aufgenommen werden können. Bei dem gezeigten Ausführungsbeispiel ist der Schallaufnehmer 19 unterhalb einer nach unten offenen Halbschale des Blechteils 2 angeordnet. Dabei liegt der Schallaufnehmer 19 mit seiner Tastspitze 23 direkt am Blechteil 2 an. Die Aufzeichnung der Signale beginnt kurz vor der Anregung mit dem Stößel 21. Die Aufzeichnung dauert je nach Taktzeit der Pressenstraße. Es ist möglich, mit einer Aufzeichnung, die nicht länger als eine Sekunde dauert, Rückschlüsse auf die Qualität des Blechteils zu ziehen. Optimalerweise sollte die Aufzeichnung solange andauern, bis die Schwingungen nahezu abgeklungen sind.

Als Schallaufnehmer 19 kann ein Körperschallsensor in Frage kommen, der mit einer Tastspitze 23 am Blechteil 2 anlegt. Alternativ ist ein Mikrofon als Schallaufnehmer denkbar, wenn die Umgebungsgeräusche nicht so stark sind, dass sie das Messergebnis beeinflussen. Weitere alternative Schwingungssensoren können ein Laservibrometer, ein Ultraschallsensor oder ein Radarsensor sein, die jeweils geeignet für die Schwingungsmessung sind. Wichtig dabei ist, dass diese Sensoren kontaktlos die Schwingung messen, was Vorteile hinsichtlich der Massenrückwirkung und der Zustellzeiten hat. Allgemein kann zusammengefasst werden, dass alle Sensoren und Messprinzipien geeignet sind, bei denen der Schwingweg, die Schwinggeschwindigkeit oder Schwingbeschleunigung gemessen wird und das gewonnene Signal zur Frequenzauswertung geeignet ist.

Die aufgezeichneten Signale werden an die zentrale Steuereinheit übertragen und ausgewertet. Die Auswertung erfolgt in einer Auswerteeinheit durch Vergleiche mit einem bekannten Schallverlauf. Diese Referenzkurve wird im Vorfeld der Inbetriebnahme der Prüfvorrichtung 4 durch sog. Einlernen erstellt. Anhand von visuell beurteilten Blechteilen 2 in einer signifikanten Stückzahl, die in "i.O.-in Ordnung"- und in "n.i.O-nicht in Ordnung"-Teile eingeteilt werden, kann eine Kurve mit entsprechendem Toleranzbereich festgelegt werden. Liegt die gemessene Schallkurve außerhalb des Toleranzbereichs wird dieses Blechteil als n.i.O.-Teil aussortiert. Dies erfolgt, indem die Auswerteeinheit ein Signal an die Sortiervorrichtung erteilt, die beispielsweise ein nachgeschalteter Roboter sein kann. Dieser Roboter gibt entweder die i.O.-Teile an die nachfolgenden Stationen weiter oder legt das n.i.O.-Teil auf einem Stapel ab. Die n.i.O.-Teile können in einem weiteren Verfahrensschritt manuell noch einmal überprüft werden. Kommt es zu einer Häufung von n.i.O.-Teilen kann eine Rückkopplung an die Maschinensteuerung erfolgen. Außerdem können n.i.O.-Teile im Nachgang visuell überprüft werden, und Teile herausgefiltert werden, die noch nacharbeitbar sind.

Das Verfahren zur Überprüfung der Qualität von tiefgezogenen Blechteilen gestaltet sich mit der oben beschriebenen Vorrichtung wie folgt:
Ein Werker oder ein Roboter übernimmt das Blechteil 2 aus der letzten Pressenstufe und legt dieses in die Aufnahmen der Prüfeinrichtung 4 ein. Der Stößel 21 des Impulsgebers 20 regt das auf den zwei Auflagepunkten ruhende Blechteil 2 zum Schwingen an, währenddessen die Aufzeichnung der Schallkurve durch den Schallaufnehmer 19 erfolgt. Ergibt ein Vergleich der aufgezeichneten Schallkurve mit der Referenzkurve, dass das Blechteil 2 außerhalb des Toleranzbereichs der Referenzkurve liegt, wird das Blechteil 2 durch eine Sortiervorrichtung, die entweder ein Roboter oder ein Werker sein kann aus dem Produktionsprozess aussortiert.

## Patentansprüche

1. Vorrichtung für die Qualitätsprüfung von Blechteilen (2), insbesondere von Tiefziehteilen, mit einer Prüfvorrichtung (4),
- die einen das Blechteil zum Schwingen anregenden Impulsgeber,
- einen den Schallverlauf aufnehmenden Schallaufnehmer und
- eine Auswerteeinheit umfasst, die den aufgezeichneten Schallverlauf mit einer Referenzkurve vergleicht und ein Signal erzeugt, mit dem eine Klassifizierung der Blechteile erfolgt,
**dadurch gekennzeichnet, dass** Blechteile (2) der Prüfvorrichtung (4) taktgebunden zuführbar sind, wobei Blechteile (2), deren aufgezeichneter Schallverlauf nicht in einem Toleranzbereich der Referenzkurve liegt, durch eine Sortiervorrichtung aussortierbar ist.

2. Vorrichtung nach Anspruch 1,
**dadurch gekennzeichnet,**
**dass** die Prüfvorrichtung (4) einen Rahmen (5) umfasst, der schwingungsentkoppelt auf einem Boden oder auf einem Maschinenteil befestigt ist.

3. Vorrichtung nach Anspruch 2,
die Schwingungsentkopplung als elastomeres Lager (6) ausgeführt ist, die an mit dem Boden oder dem Maschinenteil befestigten Füßen (7) gehalten ist.

4. Vorrichtung nach Anspruch 2 oder 3,
**dadurch gekennzeichnet,**
**dass** das Blechteil (2) während der Aufzeichnung der Schallkurve auf mindestens zwei Aufnahmen (15, 16) der Prüfvorrichtung (4) gelagert ist.

5. Vorrichtung nach Anspruch 4,
**dadurch gekennzeichnet,**
**dass** die mindestens zwei Aufnahmen (15, 16) mit einem Abstand, der der überwiegenden Länge oder Breite des Blechteils (2) entspricht, voneinander beabstandet sind.

6. Vorrichtung nach Anspruch 4 oder 5,
**dadurch gekennzeichnet,**
**dass** die Aufnahmen (15, 16) schwingungsentkoppelt vom Rahmen (5) sind.

7. Vorrichtung nach Anspruch 6,
**dadurch gekennzeichnet,**
**dass** ein Aufnahmebolzen (17, 18) die elastomer ausgebildeten Aufnahmen (15, 16) durchsetzt.

8. Vorrichtung nach Anspruch 7,
**dadurch gekennzeichnet,**
**dass** der Aufnahmebolzen (17,18) abgerundet ausgebildet ist.

9. Vorrichtung nach einem der vorgenannten Ansprüche 4 bis 8,
**dadurch gekennzeichnet,**
**dass** im Nahbereich einer Aufnahme (15) der Schallaufnehmer (19) angeordnet ist.

10. Vorrichtung nach einem der vorgenannten Ansprüche 4 bis 9,
**dadurch gekennzeichnet,**
**dass** im Nahbereich der beabstandeten Aufnahme (16) der Impulsgeber (20) angeordnet ist.

11. Verfahren für die Qualitätsprüfung von Blechteilen, insbesondere von Tiefziehteilen, mit einer Prüfvorrichtung (4),
- deren Impulsgeber (20) das Blechteil zum Schwingen anregt,
- deren Schallaufnehmer den Schallverlauf aufnimmt und
- deren Auswerteeinheit den aufgezeichneten Schallverlauf mit einer Referenzkurve vergleicht und ein Signal erzeugt, mit dem eine Klassifizierung der Blechteile erfolgt,
**dadurch gekennzeichnet, dass** der Prüfvorrichtung (4) Blechteile aus einer vorgeschalteten Pressenstraße taktgebunden zugeführt werden, wobei Blechteile (2), deren aufgezeichneter Schallverlauf nicht in einen Toleranzbereich der Referenzkurve liegt, durch eine Sortiervorrichtung aussortiert werden.

12. Verfahren nach Anspruch 11,
**dadurch gekennzeichnet,**
**dass** eine Zuführeinrichtung das Blechteil (2) von der vorgeschalteten Pressenstraße übernimmt.

13. Verfahren nach Anspruch 12,
**dadurch gekennzeichnet,**
**dass** die Zuführeinrichtung das Blechteil (2) in die Prüfvorrichtung (4) einlegt.

14. Verfahren nach Anspruch 13,
**dadurch gekennzeichnet,**
**dass** die Zuführeinrichtung das Blechteil (2) auf zwei Aufnahmebolzen (17, 18) der Prüfvorrichtung (4) einlegt.

15. Verfahren nach Anspruch 14,
**dadurch gekennzeichnet,**
**dass** der Impulsgeber 20 das auf den zwei Aufnahmebolzen (17, 18) ruhende Blechteil (2) zum Schwingen anreget, währenddessen die Aufzeichnung der Schallkurve durch den Schallaufnehmer (19) erfolgt.

16. Verfahren nach Anspruch 15,
**dadurch gekennzeichnet,**
**dass** die aufgezeichnete Schallkurve mit einer Referenzkurve in einer Auswerteeinheit verglichen wird.

17. Verfahren nach Anspruch 16,
**dadurch gekennzeichnet,**
**dass** die Sortiervorrichtung, sofern die aufgezeichnete Schallkurve innerhalb der Referenzkurve liegt, dass das Blechteil (2) an die nächste Bearbeitungsstation übergibt.

18. Verfahren nach Anspruch 16,
**dadurch gekennzeichnet,**
**dass** die Sortiervorrichtung, sofern die aufgezeichnete Schallkurve außerhalb der Referenzkurve liegt, dass das Blechteil (2) an eine Zwischenstation übergibt.

19. Verfahren nach Anspruch 18,
**dadurch gekennzeichnet,**
**dass** die aussortierten Blechteile (2) der Zwischenstation einer zweiten Qualitätsprüfung unterzogen werden.

## Claims

1. Device for quality testing sheet metal parts (2), particularly deep-drawn parts, with a testing device (4),
- which comprises a pulse generator which excites the sheet metal part to oscillate,
- a sound sensor which picks up the sound profile, and
- an evaluation unit which compares the recorded sound profile with a reference curve and generates a signal with which the sheet metal parts are classified,
**characterized in that** sheet metal parts (2) can be fed to the testing device (4) in a clock cycle controlled fashion, wherein sheet metal parts (2) whose recorded sound profile does not lie in a tolerance range of the reference curve can be eliminated by a sorting device.

2. Device according to Claim 1,
**characterized**
**in that** the testing device (4) comprises a frame (5) which is attached to a floor or to a machine part so as to be decoupled from oscillations.

3. Device according to Claim 2,
**characterized**
**in that** the oscillation decoupling means is embodied as an elastomer bearing (6) and is secured to feet (7) which are attached to the floor or to the machine part.

4. Device according to Claim 2 or 3,
**characterized**
**in that** during the recording of the sound curve the sheet metal part (2) is mounted on at least two receptacles (15, 16) of the testing device (4).

5. Device according to Claim 4,
**characterized**
**in that** the at least two receptacles (15, 16) are spaced apart from one another at a distance which corresponds to the major part of the length or width of the sheet metal part (2).

6. Device according to Claim 4 or 5,
**characterized**
**in that** the receptacles (15, 16) are oscillation-decoupled from the frame (5).

7. Device according to Claim 6,
**characterized**
**in that** a receptacle bolt (17, 18) penetrates the receptacles (15, 16) which are constructed from elastomer.

8. Device according to Claim 7,
**characterized**
**in that** the receptacle bolt (17, 18) is of rounded design.

9. Device according to one of the preceding Claims 4 to 8,
**characterized**
**in that** the sound sensor (19) is arranged in the vicinity of a receptacle (15).

10. Device according to one of the preceding Claims 4 to 9,
**characterized**
**in that** the pulse generator (20) is arranged in the vicinity of the spaced-apart receptacle (16).

11. Method for quality testing sheet metal parts, particularly deep-drawn parts, with a testing device (4),
- whose pulse generator (20) excites the sheet metal part to oscillate,
- whose sound sensor picks up the sound profile, and
- whose evaluation unit compares the recorded sound profile with a reference curve and generates a signal with which the sheet metal parts are classified,
**characterized in that** sheet metal parts are fed in a clock cycle controlled fashion to the testing device (4) from a press line arranged upstream, wherein sheet metal parts (2) whose recorded sound profile does not lie in a tolerance range of the reference curve are eliminated by a sorting device.

12. Method according to Claim 11,
**characterized**
**in that** a feed device receives the sheet metal part (2) from the press line arranged upstream.

13. Method according to Claim 12,
**characterized**
**in that** the feed device inserts the sheet metal part (2) into the testing device (4).

14. Method according to Claim 13,
**characterized**
**in that** the feed device places the sheet metal part (2) on two receptacles bolts (17, 18) of the testing device (4).

15. Method according to Claim 14,
**characterized in that**
the pulse generator (20) excites the sheet metal part (2) resting on the two receptacle bolts (17, 18) to oscillate, during which the sound curve is recorded by the sound sensor (19).

16. Method according to Claim 15,
**characterized**
**in that** the recorded sound curve is compared with a reference curve in an evaluation unit.

17. Method according to Claim 16,
**characterized**
**in that** if the recorded sound curve lies within the reference curve, the sorting device transfers the sheet metal part (2) to the next processing station.

18. Method according to Claim 16,
**characterized**
**in that** if the recorded sound curve lies outside the reference curve, the sorting device transfers the sheet metal part (2) to an intermediate station.

19. Method according to Claim 18,
**characterized**
**in that** the eliminated sheet metal parts (2) are subjected to the intermediate station of a second quality testing means.

## Revendications

1. Dispositif de contrôle de qualité de pièces en tôle (2), notamment de pièces d'emboutissage, avec un dispositif de contrôle (4) comprenant :
- un capteur d'impulsions excitant la pièce en tôle pour la faire vibrer ;
- un capteur acoustique enregistrant la trajectoire du son ; et
- une unité d'analyse comparant la trajectoire du son enregistrée à une courbe de référence et produisant un signal permettant de réaliser un classement des pièces en tôle ;
**caractérisé en ce que** les pièces en tôle (2) du dispositif de contrôle (4) peuvent être amenées de façon cadencée, les pièces en tôle (2) dont la trajectoire du son enregistrée ne se situe pas dans une plage de tolérance de la courbe de référence pouvant être écartées par un dispositif de tri.

2. Dispositif selon la revendication 1, **caractérisé en ce que** le dispositif de contrôle (4) comprend un cadre (5) fixé sur un fond ou sur une partie de machine de façon à découpler les vibrations.

3. Dispositif selon la revendication 2, **caractérisé en ce que** le découplage des vibrations prend la forme d'un palier de roulement (6) en élastomère maintenu au niveau des pieds (7) fixés au fond ou à la partie de machine.

4. Dispositif selon la revendication 2 ou 3, **caractérisé en ce que** la pièce en tôle (2) est disposée sur au moins deux logements (15, 16) du dispositif de contrôle (4) pendant l'enregistrement de la courbe du son.

5. Dispositif selon la revendication 4, **caractérisé en ce que** les au moins deux logements (15, 16) sont placés à une certaine distance l'un de l'autre correspondant à la longueur ou à la largeur dominante de la pièce en tôle (2).

6. Dispositif selon la revendication 4 ou 5, **caractérisé en ce que** les logements (15, 16) sont disposés de façon découplée du cadre (5) sur le plan des oscillations.

7. Dispositif selon la revendication 6, **caractérisé en ce qu'**un goujon de logement (17, 18) traverse les logements (15, 16) réalisés en élastomère.

8. Dispositif selon la revendication 7, **caractérisé en ce que** le goujon de logement (17, 18) prend une forme arrondie.

9. Dispositif selon l'une quelconque des revendications 4 à 8, **caractérisé en ce que** le capteur acoustique (19) est disposé dans la région proximale d'un logement (15).

10. Dispositif selon l'une quelconque des revendication 4 à 9, **caractérisé en ce que** le logement (16) espacé du capteur d'impulsions (20) est disposé dans la région proximale.

11. Procédé de contrôle de qualité de pièces en tôle, notamment de pièces d'emboutissage, avec un dispositif de contrôle (4) :
- dont le capteur d'impulsions (20) excite la pièce en tôle pour la faire vibrer ;
- dont le capteur acoustique enregistre la trajectoire du son ;
- dont l'unité d'analyse compare la trajectoire du son enregistrée à une courbe de référence et produit un signal permettant d'établir un classement des pièces en tôle ;
**caractérisé en ce que** les pièces en tôle provenant d'une voie de pressage connectée en amont sont amenées au dispositif de contrôle (4) de façon cadencée, les pièces en tôle (2) dont la trajectoire du son enregistrée ne se situe pas dans une plage de tolérance de la courbe de référence étant écartées par un dispositif de tri.

12. Procédé selon la revendication 11, **caractérisé en ce qu'**un dispositif d'amenée reprend la pièce en tôle (2) provenant de la voie de pressage connectée en amont.

13. Procédé selon la revendication 12, **caractérisé en ce que** le dispositif d'amenée de la pièce en tôle (2) est placé dans le dispositif de contrôle (4).

14. Procédé selon la revendication 13, **caractérisé en ce que** le dispositif d'amenée de la pièce en tôle (2) est placé sur deux goujons de logement (17, 18) du dispositif de contrôle (4).

15. Procédé selon la revendication 14, **caractérisé en ce que** le capteur d'impulsions (20) excite la pièce en tôle (2) reposant sur les deux goujons de logement (17, 18) pour la faire vibrer pendant l'enregistrement de la courbe du son par le capteur acoustique (19).

16. Procédé selon la revendication 15, **caractérisé en ce que** la courbe du son enregistrée est comparée à une courbe de référence dans une unité d'analyse.

17. Procédé selon la revendication 16, **caractérisé en ce que** le dispositif de tri transmet la pièce en tôle (2) à la station de traitement suivante dès lors que la courbe du son enregistrée se situe à l'intérieur de la courbe de référence.

18. Procédé selon la revendication 16, **caractérisé en ce que** le dispositif de tri transmet la pièce en tôle (2) à une station intermédiaire dès lors que la courbe du son enregistrée se situe à l'extérieur de la courbe de référence.

19. Procédé selon la revendication 18, **caractérisé en ce que** les pièces en tôle (2) de la station intermédiaire écartées sont soumises à un deuxième contrôle de qualité.
